# EUROPÄISCHE PATENTSCHRIFT

(11) **EP 3 315 874 B1**
(45) Veröffentlichungstag und Bekanntmachung des Hinweises auf die Patenterteilung: **23.09.2020**
(21) Anmeldenummer: 17001783.4
(22) Anmeldetag: 25.10.2017
(51) Int. Cl.: F24S 25/613, F24S 25/70, H02S 20/23

(54) **GETEILT AUSGEBILDETER DACHHAKEN FÜR HOHE BELASTUNGEN**
ROOF HOOK HAVING A SPLIT DESIGN FOR HIGH LOADS
CROCHET DE TOIT CONÇU EN PLUSIEURS PIÈCES POUR CHARGES ÉLEVÉES

(30) Priorität: 27.10.2016 DE 102016013153
(43) Veröffentlichungstag der Anmeldung: 02.05.2018
(73) Patentinhaber: S:FLEX GmbH, 21029 Hamburg (DE)
(72) Erfinder: Wolff, Lutz, 17268 Milmersdorf (DE)
(74) Vertreter: Kietzmann, Manfred

(56) Entgegenhaltungen:
- EP-A1- 2 527 762
- EP-A2- 2 423 621
- CH-A5- 652 161
- CN-U- 203 562 992
- DE-U1-202010 001 175
- DE-U1-202010 013 933
- DE-U1-202011 005 591
- DE-U1-202016 103 894

## Beschreibung

Die Erfindung betrifft einen geteilt ausgebildeten Dachhaken zur Übertragung hoher Lasten, insbesondere von Solaranlagen oder anderen Dachaufbauten in die Unterkonstruktion von Dächern.

Als Solaranlagen können Photovoltaikmodule oder auch Solarkollektoren Anwendung finden, die auf Traggerüsten montiert mit Dachhaken verbunden sind oder es besteht eine direkte Verbindung zu den Dachhaken.

Geteilt ausgebildete Dachhaken bestehen aus einem Fußteil, das mit der Dachunterkonstruktion verbunden ist und dem eigentlichen Hakenteil, das durch die Dachdeckung geführt und mit dem Fußteil einerseits und mit dem Traggerüst oder dem Solarmodul andererseits verbunden ist.

Fußteil und Hakenteil können starr, z. B. durch Verschweißen, oder lösbar, z. B. durch eine Bolzen-Mutter-Verbindung, miteinander verbunden sein. Die lösbare Verbindung lässt gewöhnlich noch eine Höhenverstellung zwischen dem Fußteil und dem Hakenteil zu.

Eine lösbare Bolzen-Mutter-Verbindung an einem T-förmigen Steg des Fußteils ist aus der DE 20 2010 001 175 U1 bekannt. Durch die Verwendung von Langlöchern im Steg ist eine Höhenverstellung möglich. Ein seitliches Verdrehen wird durch parallel zum Fußteil verlaufende Verzahnungen im Steg und im Hakenteil verhindert.

Der Dachhaken aus der DE 20 2009 001 025 U1 verwendet anstelle einer Bolzen-Mutter-Verbindung zur Anbindung des Hakenteils an das Fußteil zwei U-förmig angeordnete Stege am Fußteil, die eine Innenverzahnung aufweisen, wobei zwischen die U-förmigen Stege der Dachhaken mit einer Innenverzahnung höhenvariabel einsetzbar ist und mittels eines Klemmstückes in eine der Innenverzahnungen der Stege form- und kraftschlüssig einpressbar ist.

Bei der DE 10 2010 054 175 A1 kommt ein Steg am Fußteil zum Einsatz, der beidseitig parallel zum Fußteil verlaufende Nute aufweist, in die sich ein U-Anschluss des Hakenteils mit komplementär geformten beidseitig innenwandig angeordneten Stegen seitlich einschieben lässt und mittels eines Bolzens gegen Verschieben gesichert wird. Durch die Auswahl unterschiedlicher Nut-Steg-Paarungen ist eine Höhenverstellung möglich.

Den genannten Konstruktionen von geteilt ausgebildeten Dachhaken ist im Wesentlich gemeinsam, dass das Fußteil einen zur Befestigungsebene auf der Dachunterkonstruktion senkrechten Steg aufweist, an dem der eigentliche Haken angeflanscht ist. Aufgrund des Hebelarms des Hakenteils unterliegt dieser Winkel einer hohen Belastung.

Bei einer Höhenverstellung zwischen dem Hakenteil und dem Steg des Fußteils vergrößert sich die Belastung weiter. Das hat Hersteller dazu bewogen, auf ein allgemein bekanntes Prinzip zurückzugreifen, nämlich zwischen dem in der Befestigungsebene liegenden Abschnitt des Fußteils und dem dazu senkrecht stehenden Befestigungssteg für das Hakenteil Verstärkungsrippen oder Verstärkungsstege anzuordnen (DE 20 2006 009 674 U1, EP 1 764 454 A2).

Diese die Belastbarkeit verbessernde Maßnahme ist mit höheren Produktionskosten bei der Herstellung der Dachhaken verbunden, indem auf ein Gussverfahren ausgewichen wird oder zusätzliche Umformungsschritte zum Anformen der Stege notwendig werden.

Aus der EP 2 423 621 A2 ist weiter eine Befestigungsanordnung für eine Profilschiene des Unterbaus von auf einem Dach zu montierenden Solarmodulen bekannt. Die Anordnung weist ein Fixierelement auf, um einen Haltebügel eines Dachhakens an der Profilschiene zu fixieren, wobei das Fixierelement zuerst an der Profilschiene anbringbar ist und nachfolgend an dem Haltebügel. Die Profilschiene und das Fixierelement weisen korrespondierende Steckmerkmale auf, so dass das Fixierelement an die Profilschiene ansteckbar ist.

Die EP 2 527 762 A1 lehrt einen geteilt ausgebildeten Dachhaken, dessen Fußteil mit einem Hakenteil durch ein Verbindungsmittel verbindbar ist. Dabei wird das Hakenteil zwischen einer Kontaktfläche des Fußteils und der Kontaktfläche eines am Fußteil in einer Nut geführten Winkelteils unter Nutzung von Querverzahnungen formschlüssig angeordnet.

Aus der CH 652 161 A5 ist ein Dacheindeckungselement für eine Sonnenkollektorbefestigung bekannt, die einen Blechziegel verwendet, welcher unten einen Dachhaken und oben eine metallische Halterung für die Tragbalken für Sonnenkollektoren aufweist.

Aufgabe der Erfindung ist es, eine hochbelastbare Verbindung zwischen einem Haken- und einem Fußteil eines Dachhakens vorzuschlagen, wobei der Dachhaken technologisch rationell herstellbar ist, indem zumindest teilweise auf die Technologie des Ablängens von stranggepresstem Aluminium zurückgegriffen wird und der zumindest in einer Ausführung über die Möglichkeit der Höhenverstellung verfügen soll.

Gelöst wird diese Aufgabe mit den Merkmalen des Anspruchs 1. Vorteilhafte Ausgestaltungen sind Gegenstand der Unteransprüche.

Erfindungsgemäß wird für einen geteilt ausgebildeten Dachhaken mit einem Fuß- und einem Hakenteil, wobei das Fußteil T-profilförmig ausgebildet ist mit einer Befestigungsplatte für die Verschraubung mit der Dachunterkonstruktion und mit einem T-förmig abragenden Befestigungssteg für ein Ende des Hakenteils und wobei der Befestigungssteg und das eine Ende des Hakenteils jeweils mindestens eine Bohrung aufweisen zur Herstellung einer Bolzen-Mutter-Verbindung zwischen diesen, vorgeschlagen, dass neben dem Befestigungssteg ein weiterer Steg lösbar in einer parallel zum Befestigungssteg in der Befestigungsplatte befindlichen nutartigen Aufnahme angeordnet ist, derart dass zwischen dem Befestigungssteg und dem weiteren Steg eine Aufnahme für das eine Ende des Hakenteils besteht und der weitere Steg über eine Bohrung verfügt, so dass er in die Bolzen-Mutter-Verbindung einbeziehbar ist, wobei bei hergestellter Bolzen-Mutter-Verbindung der Befestigungssteg und der weitere Steg jeweils auf gegenüberliegenden Seiten an dem einen Ende des Hakenteils mindestens kraftschlüssig anliegen, wobei der weitere Steg einen in Steglängsrichtung verlaufenden Fußabschnitt aufweist, der in die Aufnahme der Befestigungsplatte eingreift, wobei der Fußabschnitt außermittig am weiteren Steg angeordnet ist.

Die vom Hakenteil ausgehende Belastung wird so sowohl durch den Befestigungssteg des Fußteils als auch durch den weiteren Steg in die Befestigungsplatte des Fußteils übertragen.

Desweiteren lässt sich auf diese Weise der weitere Steg in zwei Positionen in der Aufnahme anordnen, wobei sich diese Positionen im lichten Abstand zwischen dem Befestigungssteg und dem senkrecht zur Befestigungsplatte stehenden weiteren Steg unterscheiden. Das bedeutet, dass Hakenteile mit unterschiedlichen Dicken des einen Endes in die Bolzen-Mutter-Verbindung einbeziehbar sind.

Eine weitere vorteilhafte Ausführung sieht vor, dass der weitere Steg oder dessen Fußabschnitt bei hergestellter Bolzen-Mutter-Verbindung Formschluss in Richtung Hakenteil mit der nutartigen Aufnahme der Befestigungsplatte aufweisen. Dies wird auf einfache Weise bei einer Ausführung dadurch erreicht, dass die nutartige Aufnahme eine Innenkröpfung aufweist, die über eine kopfartige Verdickung des weiteren Steges oder dessen Fußabschnitts greift.
Die Innenkröpfung ist bevorzugt einseitig, so dass die kopfartige Verdickung bei seitlich geneigter Lage des weiteren Steges in die nutartige Aufnahme einsetzbar ist und der Formschluss in Richtung Hakenteil eintritt, wenn der weitere Steg in eine senkrechte Position zur Befestigungsplatte bewegt wird.

Eine weitere vorteilhafte Ausgestaltung sieht vor, dass der weitere Steg ein- oder beidseitig eine Verzahnung aufweist von denen eine Verzahnung nach der Herstellung der Bolzen-Mutter-Verbindung in eine komplementäre Verzahnung des einen Endes des Hakenteils eingreift. Wenn, wie oben beschrieben, verschiedene Dicken des Endes des Hakenteils einsetzbar sein sollen, weist der weitere Steg bevorzugt beidseitig eine Verzahnung auf.

Weiter ist es von Vorteil, wenn auch der Befestigungssteg des Fußteils eine Verzahnung aufweist, die bei hergestellter Bolzen-Mutter-Verbindung in eine komplementäre Verzahnung des Endes des Hakenteils eingreift.

Der Begriff Verzahnung im hier gebrauchten Sinn schließt Riffelungen mit ein.

Eine weitere Ausgestaltung sieht vor, dass die Bohrung in dem einen Ende des Hakenteils zur Herstellung der Bolzen-Mutter-Verbindung ein Langloch ist, mit einer Längsachse senkrecht zur Befestigungsplatte verlaufend. Auf diese Weise ist eine begrenzte Höhenverstellung des Hakenteils möglich.

Die Bohrung des Befestigungssteges zur Herstellung der Bolzen-Mutter-Verbindung ist bevorzugt ein Langloch mit einer Längsachse parallel zur Befestigungsplatte verlaufend. Damit ist auch eine begrenzte seitliche Verschiebbarkeit des Hakenteils möglich. Der weitere Steg verschiebt sich dabei in der nutartigen Aufnahme der Befestigungsplatte.

Anstelle eines Langloches kann der Befestigungssteg auch mehrere nebeneinander angeordnete Bohrungen aufweisen.

Bei einer bevorzugten Ausführung sind das Fußteil und der lösbare weitere Steg aus stranggepresstem Aluminium und das Hakenteil aus Stahl hergestellt.

Die Befestigungsplatte, der Befestigungssteg, die nutartige Aufnahme mit Innenkröpfung und die Verzahnung sind so angeordnet, dass sich das Fußteil aus stranggepressten Aluminiumprofilen durch Ablängen quer zur Profillängsrichtung herstellen lässt.

Das gilt auch für den weiteren Steg mit seinem Fußabschnitt und der kopfartigen Verdickung.

Das Hakenteil weist bevorzugt eine galvanische Beschichtung auf, wenn es aus Stahl hergestellt ist.

Andere Schutzmaßnahmen wie z. B. Feuerverzinken haben sich nicht bewährt, da sie das Ineinandergreifen der Verzahnungen einschränken und bei Riffelungen nahezu unmöglich machen.

Die Erfindung soll anhand der Zeichnungen in einer vorteilhaften Ausführung erläutert werden. Es zeigen:
- Fig. 1: den montierten Dachhaken mit einem Hakenteil in einer oberen Position,
- Fig. 2: das Hakenteil in einer unteren Position und
- Fig. 3: eine perspektivische Ansicht.

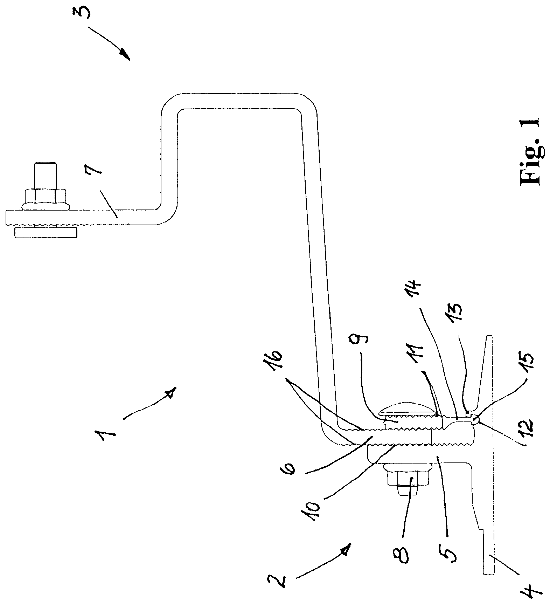

Der in den **Fig. 1** bis **3** dargestellte, geteilt ausgebildeter Dachhaken 1 weist ein Fußteil 2 und ein Hakenteil 3 auf. Das Fußteil 2 ist T-profilförmig ausgebildet mit einer Befestigungsplatte 4 für die Verschraubung mit der Dachunterkonstruktion und mit einem T-förmig abragenden Befestigungssteg 5 für das eine Ende 6 des Hakenteils 3. Das andere Ende 7 des Hakenteils dient zur Befestigung von Dachaufbauten.

Neben dem Befestigungssteg 5 ist ein weiterer Steg 9 lösbar in einer parallel zum Befestigungssteg 5 in der Befestigungsplatte 4 befindlichen nutartigen Aufnahme 12 angeordnet, derart, dass zwischen dem Befestigungssteg 5 und dem weiteren Steg 9 eine Aufnahme für das Ende 6 des Hakenteils 3 besteht.

Der Befestigungssteg 5, das Ende 6 des Hakenteils 3 und der weitere Steg 9 verfügen über eine Bohrung, so dass sie mittels einer Bolzen-Mutter-Verbindung 8 miteinander verbindbar sind, wobei bei hergestellter Bolzen-Mutter-Verbindung 8 der Befestigungssteg 5 und der weitere Steg 9 jeweils auf einer gegenüberliegenden Seite an dem Ende 6 des Hakenteils 3 mindestens kraftschlüssig anliegen.

Der weitere Steg 9 weist beidseitig eine Verzahnung 11 auf, von denen eine Verzahnung 11 nach der Herstellung der Bolzen-Mutter-Verbindung 8 in eine komplementäre Verzahnung 16 auf einer Seite des Endes 6 des Hakenteils 3 eingreift. Der Befestigungssteg 5 des Fußteils 2 weist eine einseitige Verzahnung 10 auf, die bei hergestellter Bolzen-Mutter-Verbindung 8 in eine komplementäre Verzahnung 16 auf der anderen Seite des Endes 6 des Hakenteils 3 eingreift. Bei diesem Dachhaken besteht somit zwischen dem Befestigungssteg 5, dem Ende 6 des Hakenteils 3 und dem weiteren Steg 9 Kraft- und Formschluss bei hergestellter Bolzen-Mutter-Verbindung 8.

Die Verwendung eines beidseitig mit einer Verzahnung 11 versehenen weiteren Steges 9 hat weiter den Vorteil, dass für die Bolzen-Mutter-Verbindung 8 ein Bolzen mit einer Profilierung auf seiner Kopfunterseite nutzbar ist, die in die freie Verzahnung 11 des weiteren Steges 9 eingreift, so dass, wie gezeigt, die Mutter gut zugängig ist und kein Gegenschlüssel notwendig ist, da der Bolzen sich selbst hemmt gegen Verdrehung.

Weiter wird gezeigt, dass der weitere Steg 9 einen in Steglängsrichtung verlaufenden Fußabschnitt 14 aufweist, der in die Aufnahme 12 eingreift, wobei der Fußabschnitt 14 außermittig am weiteren Steg 9 angeordnet ist. Bei hergestellter Bolzen-Mutter-Verbindung 8 besteht zwischen dem Fußabschnitt 14 des weiteren Steges 9 und der nutartigen Aufnahme 12 Formschluss in Richtung Hakenteil 3. Dazu weist die nutartige Aufnahme 12 eine einseitige Innenkröpfung 13 auf, die über eine kopfartige Verdickung 15 des Fußabschnitts 14 greift. Dadurch, dass die Innenkröpfung 13 nur einseitig ausgeführt ist, besteht ausreichend Platz, um den Fußabschnitt 14 bei geneigtem weiteren Steg 9 in die nutartige Aufnahme 12 von oben einzusetzen und dann in die senkrechte Position zur Befestigungsplatte 4 zu schwenken, in der dann der Formschluss besteht. Bei einer beidseitigen Innenkröpfung der Aufnahme 12 wäre ein Einfädeln des Fußabschnittes 14 von der Seite notwendig.

Ferner wird gezeigt, dass der Fußabschnitt 14 außermittig am weiteren Steg 9 angeordnet ist. Der Fußabschnitt 14 kann in der dargestellten Position in die nutartige Aufnahme 12 eigesetzt werden oder um 180° gedreht. Dadurch vergrößert sich der Abstand zwischen dem Befestigungssteg 5 und dem lösbaren weiteren Steg 9, wodurch ein Hakenteil mit einer größeren Dicke D des Endes 6 zwischen dem Befestigungssteg 5 und dem lösbaren weiteren Steg 9 einsetzbar ist.

Durch die beschriebene Anordnung des weiteren Steges 9 können auch durch diesen Zug- und Druckkräfte in die Befestigungsplatte 4 eingeleitet werden. Die Belastung konzentriert sich somit nicht nur auf den Befestigungssteg 5 des Fußteils 2.

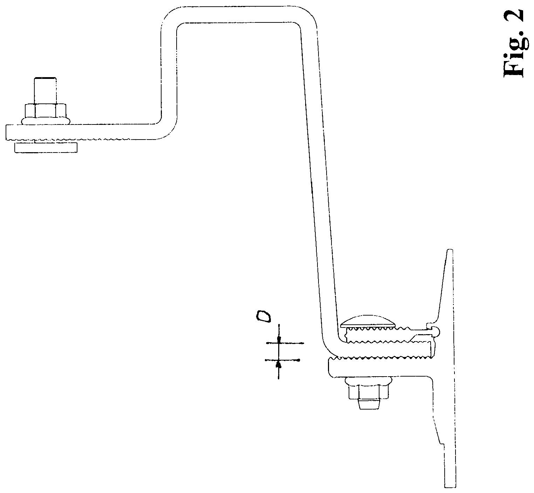

Der Unterschied zwischen **Fig. 1** und **2** besteht in der Höhenposition des Hakenteils 3 gegenüber dem Fußteil 2. Diese unterschiedlichen Positionen lassen sich dadurch realisieren, dass die Bohrung im Ende 6 des Hakenteils 3 zur Herstellung der Bolzen-Mutter-Verbindung 8 ein Langloch ist, mit einer Längsachse senkrecht zur Befestigungsplatte 4 verlaufend.

Da die Höhe des lösbaren weiteren Steges 9 kleiner ist als die Höhe des Befestigungssteges 5 bezogen auf die Oberseite der Befestigungsplatte 4 des Fußteils 2 behindert der weitere Steg 9 auch nicht die Höhenverstellung des Hakenteils 3 in die unterste Position zum Fußteil 2.

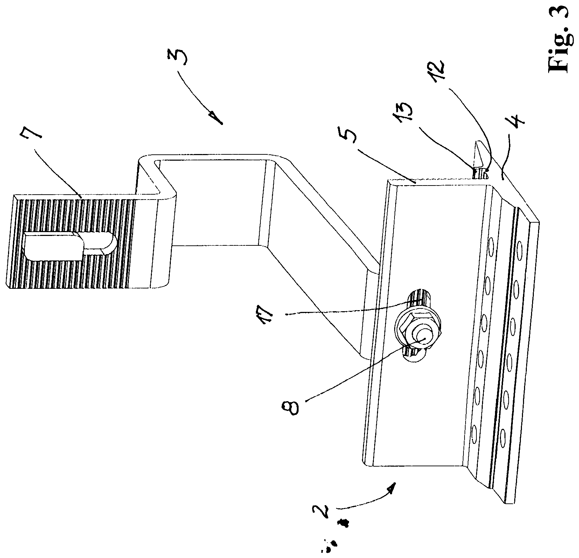

In der **Fig. 3** wird eine Möglichkeit gezeigt, die eine seitliche Verschiebbarkeit des Hakenteils 3 gegenüber dem Fußteil 2 zulässt, nämlich indem die Bohrung des Befestigungssteges 5 zur Herstellung der Bolzen-Mutter-Verbindung 8 ein Langloch 17 ist mit einer Längsachse parallel zur Befestigungsplatte 4 verlaufend. Anstelle des Langloches 17 können auch mehrere Bohrungen nebeneinander angeordnet sein.

### Bezugszeichenliste

- 1: Dachhaken
- 2: Fußteil
- 3: Hakenteil
- 4: Befestigungsplatte des Fußteils
- 5: Befestigungssteg des Fußteils
- 6: ein Ende des Hakenteils
- 7: anderes Ende des Hakenteils
- 8: Bolzen-Mutter-Verbindung
- 9: weitere Steg
- 10: Verzahnung des Befestigungssteges
- 11: Verzahnung des lösbaren Steges
- 12: nutartige Aufnahme
- 13: Innenkröpfung
- 14: Fußabschnitt des lösbaren Steges
- 15: kopfartige Verdickung
- 16: Verzahnung des Endes des Hakenteils
- 17: Langloch

## Patentansprüche

1. Geteilt ausgebildeter Dachhaken (1) mit einem Fuß- und einem Hakenteil (2, 3), wobei das Fußteil (2) T-profilförmig ausgebildet ist mit einer Befestigungsplatte (4) für die Verschraubung mit der Dachunterkonstruktion und mit einem T-förmig abragenden Befestigungssteg (5) für ein Ende (6) des Hakenteils (3) und wobei der Befestigungssteg (5) und das Ende (6) des Hakenteils (3) jeweils mindestens eine Bohrung aufweisen zur Herstellung einer Bolzen-Mutter-Verbindung (8) zwischen diesen, **dadurch gekennzeichnet, dass** neben dem Befestigungssteg (5) ein weiterer Steg (9) lösbar in einer parallel zum Befestigungssteg (5) in der Befestigungsplatte (4) befindlichen nutartigen Aufnahme (12) angeordnet ist, derart dass zwischen dem Befestigungssteg (5) und dem weiteren Steg (9) eine Aufnahme für das Ende (6) des Hakenteils (3) besteht und der weitere Steg (9) über eine Bohrung verfügt, so dass er in die Bolzen-Mutter-Verbindung (8) einbeziehbar ist, wobei bei hergestellter Bolzen-Mutter-Verbindung (8) der Befestigungssteg (5) und der weitere Steg (9) jeweils auf gegenüberliegenden Seiten an dem Ende (6) des Hakenteils (3) mindestens kraftschlüssig anliegen und wobei der weitere Steg (9) einen in Steglängsrichtung verlaufenden Fußabschnitt (14) aufweist, der in die Aufnahme (12) eingreift, wobei der Fußabschnitt (14) außermittig am Steg (9) angeordnet ist.

2. Geteilt ausgebildeter Dachhaken nach Anspruch 1, **dadurch gekennzeichnet, dass**
der weitere Steg (9) oder dessen Fußabschnitt (14) bei hergestellter Bolzen-Mutter-Verbindung (8) Formschluss in Richtung Hakenteil (3) mit der nutartigen Aufnahme (12) aufweisen.

3. Geteilt ausgebildeter Dachhaken nach Anspruch 2, **dadurch gekennzeichnet, dass**
zur Herstellung des Formschlusses die nutartige Aufnahme (12) eine Innenkröpfung (13) aufweist, die über eine kopfartige Verdickung (15) des weiteren Steges (9) oder dessen Fußabschnitts (14) greift.

4. Geteilt ausgebildeter Dachhaken nach einem der Ansprüche 1 bis 3, **dadurch gekennzeichnet, dass**
der weitere Steg (9) ein- oder beidseitig eine Verzahnung (11) aufweist von denen eine Verzahnung (11) nach der Herstellung der Bolzen-Mutter-Verbindung (8) in eine komplementäre Verzahnung (16) des Endes (6) des Hakenteils (3) eingreift.

5. Geteilt ausgebildeter Dachhaken nach einem der Ansprüche 1 bis 4, **dadurch gekennzeichnet, dass**
der Befestigungssteg (5) des Fußteils (2) eine Verzahnung (10) aufweist, die bei hergestellter Bolzen-Mutter-Verbindung (8) in eine komplementäre Verzahnung (16) des Endes (6) des Hakenteils (3) eingreift.

6. Geteilt ausgebildeter Dachhaken nach einem der Ansprüche 1 bis 5, **dadurch gekennzeichnet, dass**
die Bohrung im Ende (6) des Hakenteils (3) zur Herstellung der Bolzen-Mutter-Verbindung (8) ein Langloch ist, mit einer Längsachse senkrecht zur Befestigungsplatte (4) verlaufend.

7. Geteilt ausgebildeter Dachhaken nach einem der Ansprüche 1 bis 6, **dadurch gekennzeichnet, dass**
die Bohrung des Befestigungssteges (5) zur Herstellung der Bolzen-Mutter-Verbindung (8) ein Langloch (17) ist mit einer Längsachse parallel zur Befestigungsplatte (4) verlaufend oder es sind mehrere Bohrungen nebeneinander angeordnet.

8. Geteilt ausgebildeter Dachhaken nach einem der Ansprüche 1 bis 7, **dadurch gekennzeichnet, dass**
die Höhe des lösbaren weiteren Steges (9) kleiner ist als die Höhe des Befestigungssteges (5) bezogen auf die Oberseite der Befestigungsplatte (4) des Fußteils (2).

9. Geteilt ausgebildeter Dachhaken nach einem der Ansprüche 1 bis 8, **dadurch gekennzeichnet, dass**
das Fußteil (2) und der lösbare weitere Steg (9) aus stranggepresstem Aluminium und das Hakenteil (3) aus Stahl bestehen.

10. Geteilt ausgebildeter Dachhaken nach Anspruch 9, **dadurch gekennzeichnet, dass**
das Hakenteil (3) eine galvanische Beschichtung aufweist.

## Claims

1. A roof hook (1) of split design, with a foot part and a hook part (2, 3), wherein the foot part (2) is configured in the shape of a T profile with a fastening plate (4) for screwing together with the roof substructure and with a fastening projection (5) projecting in the manner of a T for one end (6) of the hook part (3), and wherein the fastening projection (5) and the end (6) of the hook part (3) each have at least one bore for producing a nut and bolt joint (8) therebetween,
**characterized in that**
next to the fastening projection (5) a further projection (9) is arranged detachably in a groove-type receptacle (12) located parallel to the fastening projection (5) in the fastening plate (4), such that a receptacle for the end (6) of the hook part (3) arises between the fastening projection (5) and the further projection (9), and the further projection (9) has a bore, so that it can be incorporated into the nut and bolt joint (8), wherein, once the nut and bolt joint (8) has been produced, the fastening projection (5) and the further projection (9) each rest on opposing sides against the end (6) of the hook part (3) in at least force-locking manner and wherein the further projection (9) has a foot portion (14) extending in the longitudinal direction of the projection and engaging in the receptacle (12), wherein the foot portion (14) is arranged eccentrically on the projection (9).

2. The roof hook of split design according to Claim 1, **characterized in that**
once the nut and bolt joint (8) has been produced, the further projection (9) or the foot portion (14) thereof are in form-locking connection with the groove-type receptacle (12) in the direction of the hook part (3).

3. The roof hook of split design according to Claim 2, **characterized in that**
to produce the form-locking connection, the groove-type receptacle (12) has an internal right-angle bend (13), which engages over a head-like thickened portion (15) of the further projection (9) or the foot portion (14) thereof.

4. The roof hook of split design according to any one of Claims 1 to 3, **characterized in that**
the further projection (9) has teeth (11) on one or both sides, one set (11) of which teeth engages after production of the nut and bolt joint (8) in complementary teeth (16) on the end (6) of the hook part (3).

5. The roof hook of split design according to any one of Claims 1 to 4, **characterized in that**
the fastening projection (5) of the foot part (2) has teeth (10), which, once the nut and bolt joint (8) has been produced, engages in complementary teeth (16) on the end (6) of the hook part (3).

6. The roof hook of split design according to any one of Claims 1 to 5, **characterized in that**
the bore in the end (6) of the hook part (3) for producing the nut and bolt joint (8) is a slot, with a longitudinal axis extending perpendicular to the fastening plate (4).

7. The roof hook of split design according to any one of Claims 1 to 6, **characterized in that**
the bore of the fastening projection (5) for producing the nut and bolt joint (8) is a slot (17) with a longitudinal axis extending parallel to the fastening plate (4) or a plurality of bores are arranged adjacent one another.

8. The roof hook of split design according to any one of Claims 1 to 7, **characterized in that**
the height of the detachable further projection (9) is smaller than the height of the fastening projection (5) relative to the top of the fastening plate (4) of the foot part (2).

9. The roof hook of split design according to any one of Claims 1 to 8, **characterized in that**
the foot part (2) and the detachable further projection (9) consist of extruded aluminum and the hook part (3) consists of steel.

10. The roof hook of split design according to Claim 9, **characterized in that**
the hook part (3) has an electrodeposited coating.

## Revendications

1. Crochet de toit en plusieurs parties (1) avec une partie de pied et une partie de crochet (2, 3), la partie de pied (2) étant réalisée avec une forme de profilé en T avec une plaque de fixation (4) à visser sur la sous-construction de toit et avec une nervure de fixation (5) saillante en forme de T pour une extrémité (6) de la partie de crochet (3), et la nervure de fixation (5) et l'extrémité (6) de la partie de crochet (3) présentant chacune au moins un alésage pour la réalisation d'une liaison boulon et écrou (8) entre elles,
**caractérisé en ce qu'**une autre nervure (9) est disposée à côté de la nervure de fixation (5) de manière amovible dans une ménagée dans la plaque de fixation (4) parallèlement à la nervure de fixation (5), de manière à former une réception pour l'extrémité (6) de la partie de crochet (3) entre la nervure de fixation (5) et l'autre nervure (9), et **en ce que** l'autre nervure (9) dispose d'un alésage permettant son intégration dans la liaison boulon et écrou (8), la nervure de fixation (5) et l'autre nervure (9) reposant au moins par assemblage mécanique sur des côtés opposés à l'extrémité (6) de la partie de crochet (3) lorsque la liaison boulon et écrou (8) est réalisée, et l'autre nervure (9) présentant un segment de pied (14) s'étendant dans le sens de la longueur de la barrette, inséré dans la réception (12), ledit segment de pied (14) étant disposé de manière excentrée contre la nervure (9).

2. Crochet de toit en plusieurs parties selon la revendication 1, **caractérisé en ce que** l'autre nervure (9) ou son segment de pied (14) sont en engagement positif avec la réception (12) en forme de rainure dans la direction de la partie de crochet (3) lorsque la liaison boulon et écrou (8) est réalisée.

3. Crochet de toit en plusieurs parties selon la revendication 2, **caractérisé en ce que** pour la réalisation de l'engagement positif, la réception (12) en forme de rainure présente une partie coudée vers l'intérieur (13) en prise sur un renflement en forme de tête (15) de l'autre nervure (9) ou de son segment de pied (14).

4. Crochet de toit en plusieurs parties selon l'une des revendications 1 à 3, **caractérisé en ce que**
l'autre nervure (9) présente sur une face ou sur les deux faces une denture (11), dont une denture (11) s'engage dans une denture (16) complémentaire de l'extrémité (6) de la partie de crochet (3) après réalisation de la liaison boulon et écrou (8).

5. Crochet de toit en plusieurs parties selon l'une des revendications 1 à 4, **caractérisé en ce que**
la nervure de fixation (5) de la partie de pied (2) présente une denture (10) qui s'engage dans une denture (16) complémentaire de l'extrémité (6) de la partie de crochet (3) quand la liaison boulon et écrou (8) est réalisée.

6. Crochet de toit en plusieurs parties selon l'une des revendications 1 à 5, **caractérisé en ce que**
l'alésage dans l'extrémité (6) de la partie de crochet (3) pour la réalisation de la liaison boulon et écrou (8) est un trou oblong s'étendant perpendiculairement à la plaque de fixation (4) par son axe longitudinal.

7. Crochet de toit en plusieurs parties selon l'une des revendications 1 à 6, **caractérisé en ce que**
l'alésage de la nervure de fixation (5) pour la réalisation de la liaison boulon et écrou (8) est un trou oblong (17) s'étendant parallèlement à la plaque de fixation (4) par son axe longitudinal ou **en ce que** plusieurs alésages sont disposés côte à côte.

8. Crochet de toit en plusieurs parties selon l'une des revendications 1 à 7, **caractérisé en ce que**
la hauteur de l'autre nervure (9) amovible est inférieure à la hauteur de la nervure de fixation (5) sur la face supérieure de la plaque de fixation (4) de la partie de pied (2).

9. Crochet de toit en plusieurs parties selon l'une des revendications 1 à 8, **caractérisé en ce que**
la partie de pied (2) et l'autre nervure (9) amovible sont en aluminium extrudé, et la partie de crochet (3) est en acier.

10. Crochet de toit en plusieurs parties selon la revendication 9, **caractérisé en ce que** la partie de crochet (3) présente un revêtement galvanique.
